# EUROPÄISCHE PATENTSCHRIFT

(11) **EP 3 496 987 B1**
(45) Veröffentlichungstag und Bekanntmachung des Hinweises auf die Patenterteilung: **02.11.2022**
(21) Anmeldenummer: 17749474.7
(22) Anmeldetag: 08.08.2017
(51) Int. Cl.: B61H 5/00, F16D 65/092, F16D 69/04, B60T 1/06, F16D 49/16, F16D 51/20, F16D 65/16, F16H 48/20, F16H 48/22

(54) **EINE BREMSEINRICHTUNG AUFWEISENDES DIFFERENTIALGETRIEBE**
A DIFFERENTIAL GEAR WITH A BRAKE DEVICE
DIFFÉRENTIEL AVEC UN APPAREIL DU FREIN

(30) Priorität: 11.08.2016 DE 102016214968
(43) Veröffentlichungstag der Anmeldung: 19.06.2019
(73) Patentinhaber: Continental Automotive Technologies GmbH, 30165 Hannover (DE)
(72) Erfinder: MEYER, Ulrike, 60325 Frankfurt (DE); SEMSCH, Martin, 35510 Maibach-Butzbach (DE); BACH, Uwe, 65527 Niedernhausen (DE); HOFFMANN, Jens, 64285 Darmstadt (DE); SEFO, Ahmed, 65931 Frankfurt (DE); RITTER, Wolfgang, 61440 Oberursel/Ts. (DE); GÄDKE, Martin, 65719 Hofheim/Ts. (DE); VON HAYN, Holger, 61118 Bad Vilbel (DE); MESSNER, Adrian, 55116 Mainz (DE)
(74) Vertreter: Continental Corporation
(86) Internationale Anmeldenummer: PCT/EP2017/070109
(87) Internationale Veröffentlichungsnummer: WO 2018/029211

(56) Entgegenhaltungen:
- CH-A- 276 589
- DE-A1- 1 655 348
- DE-A1-102009 018 828
- JP-A- S62 110 034
- US-A- 2 936 035
- US-A- 3 621 957
- US-A- 4 932 278

## Beschreibung

Die Erfindung bezieht sich auf ein eine Bremseinrichtung aufweisendes Differentialgetriebe mit einer Antriebswelle, zwei Abtriebswellen, ein Differentialgehäuse, das eine Eingangsöffnung für die Antriebswelle und zwei gegenüberliegende Ausgangsöffnungen für die Abtriebswellen aufweist, einem Differentialkorb und mit wenigstens einer Bremseinrichtung.

Die gattungsfremde US 3 621 957 A bezieht sich auf eine ausschließlich per Zündschloss deaktivierbare Sicherungseinrichtung gegen unbefugte Benutzung nach § 38 StVZO zwecks Absicherung gegen unautorisierte Fahrzeugnutzung, umfassend ein Achsdifferentialgetriebe mit einer Antriebswelle und mit zwei Achs-Abtriebswellen. Die Sicherung umfasst eine (dreh-)blockierte Trommel, die an einem Differentialkorb im Getriebegehäuseinneren fixiert ist. Die Sicherung ist stromlos aktiv mit einer off-Schaltfunktion, ohne dass eine reguläre Betriebsbremsfunktion offenbart noch beabsichtigt ist. Dabei ist die Sicherung grundsätzlich stromlos blockiert realisiert, indem die Trommel von einer Ringschelle als Blockierorgan von radial außen umschlungen ist, und wobei das Blockierorgan grundsätzlich über einen Federbolzen als Federspeicher in Blockierrichtung gegen die Trommel federvorgespannt ist. Zur Deaktivierung der Sicherung dient ein zündschlossbetätigter Aktuator in Gestalt eines Elektromagnetes mit angelenktem Exzenter, welcher dazu dient, das Blockierorgan mit eingeschalteter Zündung, entgegen der Speicherwirkung zu öffnen.

Die ähnlich gattungsfremde JP S62 110034 A beschreibt eine vergleichbare Sicherung anhand eines fahrzeugzentral allokierten Verteilergetriebes, das über eine Eingangswelle und eine Ausgangswelle verfügt, dem Antriebswellen fehlen, und wobei die Antriebswelle und Abtriebswelle diametral in einer Flucht zueinander gegenüberliegend arrangiert sind, und wobei ein Blockierorgan grundsätzlich eine (dreh-)blockierte Trommel beaufschlagt. Dabei beruht die Sicherung auf einem Speicherprinzip, ohne dass eine Kraftfahrzeugbetriebsbremsfunktion nachgefragt ist. Zwecks Deaktivierung - also (dreh-) Freigabe der blockierten Trommel - dient eine Kolben-Zylinderanordnung, die am Blockierorgan angreift, um die Blockierung der Trommel zu deaktivieren.

Ein Achsdifferentialgetriebe mit gehäuseintegrierter Bremseinrichtung inclusive Bremsorgane für Kraftfahrzeuge ist in der DE 38 13 528 A1 beschrieben. Demnach umfasst dies Differentialgetriebe zwei Lamellenbremseinrichtungen enthaltend drei verschieden arrangierte Lamellentypen. Darunter befindet sich eine Vielzahl von Lamellen, die radial von einer Abtriebswelle abstehen und zwischen Gegenlamellen ragen, welche unter anderem drehfest am Differentialgehäuse angeschlagen sind. Jedes so gebildete Lamellenpaket wird hydraulisch in axialer Richtung zusammengedrückt, um Bremswirkung zu erzeugen.

Die DE 39 35 115 A1 betrifft eine angetriebene Lenkachsbaugruppe mit hydraulisch betätigbarer Differentialsperre einschließlich Bremse, umfassend ein Differentialsperrenlamellenpaket sowie zwei Bremslamellenpakete in Verbindung mit Steckwellen, inclusive des Bonuseffektes einer Antiblockieroption, unabhängig vom Lenkeinschlag oder der Bremse, für unterschiedliche Bodenhaftung der Räder. Dabei ist eine individuell dosierbare Bremsbetätigung ohne Belastungsänderung der fremdbetätigbar gestalteten Differentialsperre angestrebt. Zudem wird empfohlen die Bremse, durch Einbau in einer als Zwischenflansch ausgebildeten Gehäusezwischenwand, fakultativ nachrüstbar vorzusehen.

Die DE 10 2005 018 907 A1 beschreibt ein Ausgleichsgetriebe für eine elektrisch angetriebene Antriebsachse einschließlich Multilamellenbremsanordnung in Ausgestaltung als kombinierte Fahrzeugbremse, wobei mindestens eine drehbare Lamelle mit einem Differentialkorb derart in Verbindung steht, dass bei Bremsbetätigung ein Achswellenrad sowie der Differentialkorb zum Ausgleichgetriebegehäuse so gebremst sind, dass beide Abtriebswellen gebremst sind. Dabei erfolgt die Ansteuerung für die Betriebsbremsfunktion über hydraulische Kolben und die Ansteuerung für die Feststellbremsfunktion erfolgt gesondert mechanisch über eine Welle.

Bekannte Differentialgetriebe mit Multilamellenbremse haben den Nachteil, dass Bremsorgane aufwändig zu warten sind, da diese innerhalb des Differentialgehäuses des Differentialgetriebes angeordnet sind.

Die Erfindung beruht auf der Aufgabe, technische Nachteile laut Stand der Technik zu vermeiden, und zudem die Bremseinrichtung an einem Differentialgetriebe baulich zu vereinfachen.

Zur Lösung der Aufgabe sieht die Erfindung vor, dass die wenigstens eine Bremseinrichtung eine Trommelbremse ist, die ein passives Element, das eine zylindrische Reibfläche besitzt, und Bremsbacken aufweist, deren Reibflächen an die zylindrische Reibfläche des passiven Elementes anlegbar sind, dass das passive Element an dem Differentialkorb und /oder an einer der Wellen derart befestigt ist, dass seine zylindrische Reibfläche koaxial zu einer der Öffnungen angeordnet ist, und dass die Bremsbacken auf einer Trägerplatte schwenkbar gehalten sind, die an den Rand der genannten Öffnung angeflanscht ist.

Weil mit dieser Konstruktion die Bremseinrichtung als gesondertes Bauteil außerhalb des Differentialgehäuses, aber im unmittelbaren Anschluss daran angeordnet ist, ist die Bremseinrichtung insbesondere für Wartungszwecke leicht zugänglich.

Vorzugsweise wird das passive Element, das ist das Element der Bremseinrichtung, das nicht verstellbar ist, von einem Topf gebildet, der aus einem Boden und einer umlaufenden Wand besteht, wobei die Innenseite der Wand die zylindrische Reibfläche bildet. Die offene Seite des Topfes weist zum Differentialgehäuse des Differentialgetriebes, wobei innerhalb des Topfes die Bremsbacken angeordnet sind. Auf diese Weise liegen die Bremsbacken, die gegen das passive Element verstellbar sind, gekapselt und geschützt in einer Kammer, die von der Trägerplatte und der Bremstrommel gebildet wird.

Alternativ kann das passive Element von einer Radialbremsscheibe gebildet sein, deren Mantelfläche die zylindrische Reibfläche bildet.

Um auch hier eine gekapselte Anordnung der Bremsbacken zu erreichen, ist auf der Trägerplatte ein Deckel lösbar befestigt, so dass die Trägerplatte mit den Bremsbacken und die Radialbremsscheibe eingehaust sind.

Vorzugsweise ist an beiden Abtriebswellen jeweils eine Bremseinrichtung installiert.

Eine bessere Bremswirkung wird erzielt, wenn das passive Element der einen Bremseinrichtung mit dem Differentialkorb und das passive Element der anderen Bremseinrichtung mit einer der Abtriebswellen gekoppelt ist.

Damit das passive Element an dem Differentialkorb befestigt werden kann, ist dieser an einer Seite koaxial zur dortigen Abtriebswelle mittels einer Verlängerungshülse verlängert.

In einigen Fällen wird es ausreichen, dass eine einzige Bremseinrichtung an der Antriebswelle angeordnet ist. Deren Bremswirkung setzt sich über den Differentialkorb auf die Abtriebswellen fort.

Um die Bremseinrichtung betätigen zu können, ist vorgesehen, dass die Trägerplatte nach außen radial über das Differentialgehäuse vorsteht, und an seiner Rückseite einen hydraulischen oder elektrischen Anschluss für die Stelleinrichtung der Bremsbacken aufweist.

Die Erfindung lässt sich auch besonders gut bei Differentialgetrieben einsetzen, die unmittelbar mit einem Elektromotor gekoppelt sind. Hier sind sehr kompakt bauende Anordnungen bekannt, bei denen das Getriebe selbst relativ flach ausgeführt ist und an der Stirnseite eines Elektromotors angeordnet wird.

Dabei ist ein zweiter, schwächerer Elektromotor vorgesehen, der ebenfalls zu einem Drehmomentausgleich beiträgt.

Die Erfindung sieht daher vor, diesen zweiten Elektromotor mit entsprechenden Bremseinrichtungen, wie sie zuvor beschrieben sind, zu ersetzen.

Dazu ist vorgesehen, dass der Differentialkorb mit der Abtriebswelle eines Elektromotors gekoppelt ist, wobei die Abtriebswelle hohl ausgeführt ist, und koaxial zu einer der Abtriebswellen des Differentialgetriebes verläuft.

Um die kompakte Form des Differentialgetriebes zu erhalten, ist vorgesehen, dass ein Ausgleichszahnrad in Form eines Stirnzahnrades deaxial zu den Abtriebswellen im Differentialkorb gelagert ist und dass die Abtriebswellen mit je einem Abtriebszahnrad, das ebenfalls als Stirnzahnrad ausgebildet ist, in die Verzahnung des Ausgleichszahnrades eingreifen.

Vorzugsweise werden der Elektromotor und der Differentialkorb in einem gemeinsamen zylindrischen Gehäuse untergebracht, wobei die Abtriebswellen durch die Stirnseiten des Gehäuses hindurchgeführt sind. Die Bremseinrichtungen können dann an einer oder beiden Stirnseiten angeordnet werden.

Im Folgenden soll anhand von drei Ausführungsbeispielen die Erfindung näher erläutert werden. Dazu zeigen:
- Fig. 1: eine erste Ausführungsform der Erfindung,
- Fig. 2: eine zweite Ausführungsform der Erfindung, und
- Fig. 3: eine dritte Ausführungsform der Erfindung.

Zunächst wird zur Beschreibung des Differentialgetriebes auf die ersten beiden Figuren Bezug genommen. Diese zeigen jeweils im Schnitt ein Differentialgetriebe 1, das mit einer Bremseinrichtung 2 versehen ist.

Das Differentialgetriebe 1 weist ein Differentialgehäuse 3 auf mit einer Eingangsöffnung 4 und zwei Ausgangsöffnungen 5 und 6. In der Eingangsöffnung 4 ist eine Antriebswelle 7 drehbar gelagert. Diese treibt über ein Kegelzahnrad 8 einen Differentialkorb 9 an, der quer zur Achse der Antriebswelle 7 im Differentialgehäuse 3 drehbar gelagert ist.

In dem Differentialkorb 9 befindet sich eine Kegelzahnradanordnung 10, mit deren Hilfe eine erste Abtriebswelle 11 und eine zweite Abtriebswelle 12 angetrieben werden, die seitlich aus den Ausgangsöffnungen 5 und 6 hervorstehen. Die Abtriebswellen werden mit den Vorder- bzw. Hinterrädern eines Fahrzeuges verbunden, währen die Antriebswelle 7 mit dem Motor des Fahrzeuges gekoppelt wird.

Falls beide Abtriebswellen 11, 12 gleicher Weise belastet sind, ist die Kegelzahnradanordnung 10 quasi gesperrt. Die Drehzahl der Abtriebswellen 11, 12 entspricht der Drehzahl des Differentialkorbes 9. Wenn sich die eine Antriebswelle nur langsamer drehen kann als die andere, weil z. B. bei einer Kurvenfahrt die eine Antriebswelle das innere Rad antreibt, so erfolgt ein Drehzahlausgleich über die Kegelzahnradanordnung 10.

Die Bremseinrichtung 2 wirkt auf den Differentialkorb 9 und bewirkt daher bei ihrer Betätigung die Abbremsung beider Abtriebswellen. Dazu besitzt der Differentialkorb 9 eine Verlängerungshülse 20, die aus einer der Ausgangsöffnungen 6 herausführt, und mit einem passiven Element der Bremseinrichtung 2 drehfest verbunden ist.

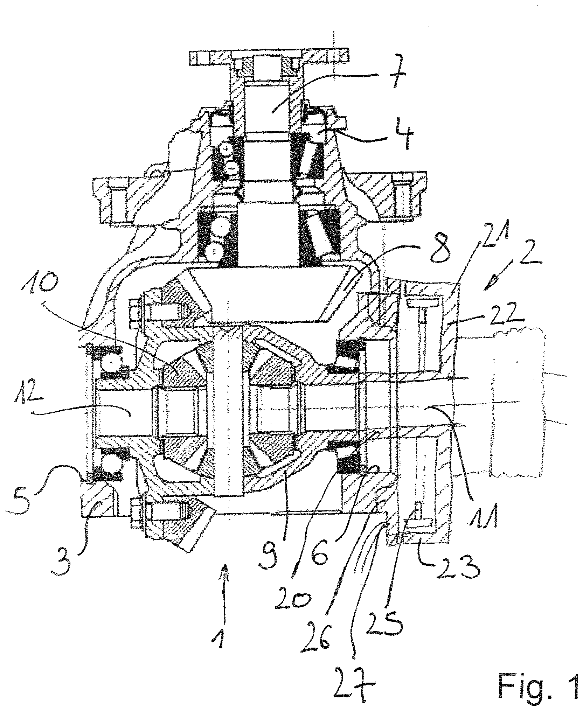

Gemäß der Ausführung nach Fig. 1 wird die Bremseinrichtung von einer Trommelbremse realisiert, wie sie in der Fahrzeugtechnik üblich ist. Demnach ist das passive Element eine topfförmige Bremstrommel 21, die aus einem scheibenförmigen Boden 22 und einer daran umlaufenden Wand besteht 23, deren Innenseite eine zylindrische Reibfläche bildet, die als Bremsfläche für zwei Bremsbacken 25 dient. Die Verlängerungshülse 20 ist mit dem Zentrum des Bodens 22 drehfest verbunden.

Die Bremsbacken 25 sind auf einer Trägerplatte 26 schwenkbar angeordnet, die um die Öffnung 6 herum und koaxial dazu angeordnet ist und an dem Differentialgehäuse 3 befestigt ist.

Auf der Trägerplatte 26 befinden sich - was hier nicht näher dargestellt ist - Betätigungseinrichtungen, z. B. hydraulische oder elektromotorische Betätigungseinrichtungen für die Bremsbacken 25. Diese werden über einen Anschluss 27 versorgt, der sich an der Rückseite der Trägerplatte 26 befindet und zwar in einem Bereich, der radial über das Differentialgehäuse 3 hinausragt. Die Bremstrommel 21 hat in etwa den gleichen Außendurchmesser wie die Trägerplatte 26, so dass beide eine Kammer einschließen, in der sich die Bremsbacken 25 geschützt vor Außeneinwirkungen befinden.

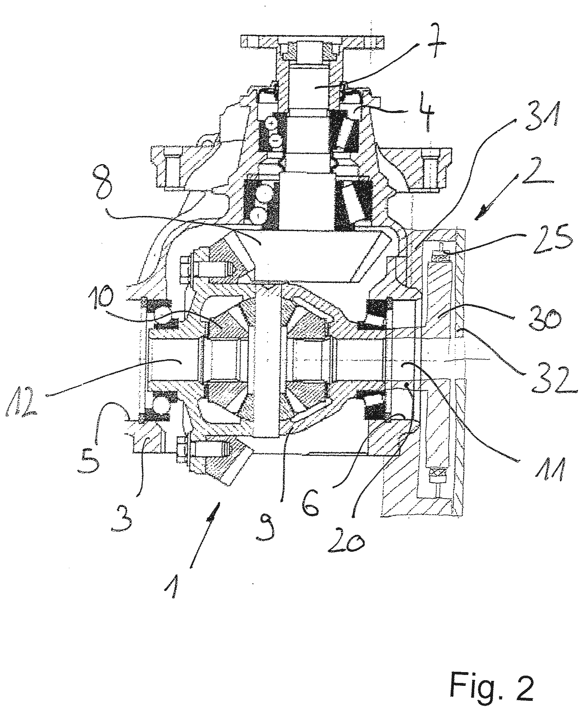

Eine alternative Form der Bremseinrichtung 2 ist in der Fig. 2 dargestellt. Hier ist die Bremstrommel als Radialbremsscheibe 30 ausgeführt, die mit dem Differentialkorb 9 verbunden ist und deren breite Mantelfläche als zylindrische Reibfläche dient. Die Bremsbacken 25 befinden sich auf einer topfförmigen Trägerplatte 31 und werden zu Bremsbetätigung nach innen gegen die Reibfläche gedrückt. Ein Deckel 32 verschließt die Trägerplatte 31 nach außen. Auch bei dieser Anordnung ist es möglich, die Radialbremsscheibe 30 unmittelbar mit der Antriebswelle 7 zu verbinden.

Für beide Ausführungen gilt grundsätzlich, dass die Bremstrommel 21 bzw. Radialbremsscheibe 30 nicht nur am Differentialkorb 9, sondern statt dessen direkt mit der jeweiligen Abtriebswelle 11, 12 gekoppelt ist. In diesem Fall sollten beide Abtriebswellen 11, 12 mit einer Bremseinrichtung 2 versehen sein. Denkbar wäre aber auch, dass eine Bremseinrichtung 2 vorgesehen ist, die auf den Differentialkorb 9 wirkt, während auf der anderen Seite des Differentialgehäuses eine Bremseinrichtung 2 vorgesehen ist, die mit der dortigen Abtriebwelle verbunden ist.

Des Weiteren kann nur eine Bremseinrichtung 2 vorgesehen werden, die auf die Antriebswelle 7 wirkt. Die Bremseinrichtung wird entsprechend den Darstellungen in der Fig.l und 2 statt an einer der Ausgangsöffnung 5, 6 an der Eingangsöffnung 4 befestigt.

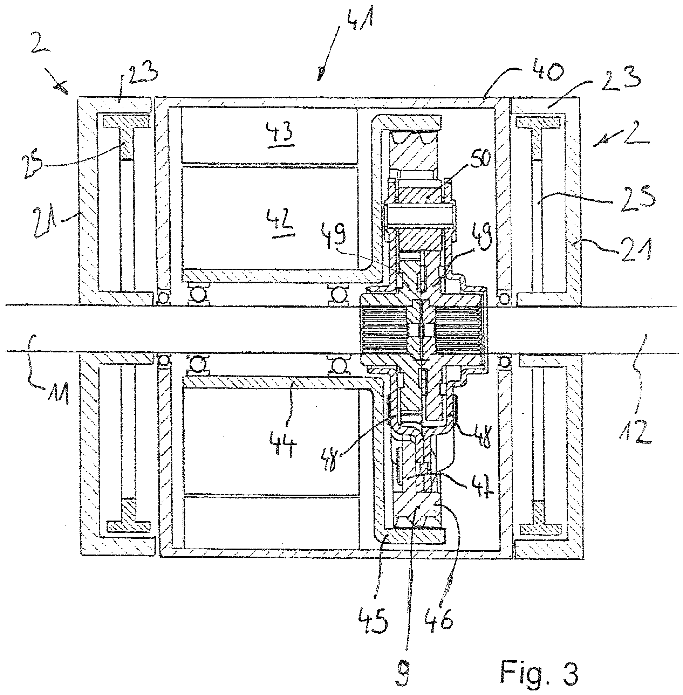

In der Fig. 3 ist eine dritte Ausführungsform der Erfindung beschrieben, bei der die Bremseinrichtungen 2 an einem zylindrischen Gehäuse 40 für einen Elektromotor 41 und einem Differentialkorb 9 angeordnet sind.

Der Rotor 42 und Stator 43 sind hier nur symbolisch angedeutet, um zu zeigen, dass jedwede Form von Elektromotoren möglich ist.

Die Abtriebswelle 44 des Elektromotors 41 ist hohl ausgeführt und erweitert sich zu einem flachen Topf 45, in dem der Differentialkorb 9 eingefasst ist, so dass er eine drehfeste Verbindung mit der Abtriebswelle 44 eingeht.

Das Differentialgehäuse 3 besteht aus einem ringförmigen Träger 46, der einen nach innen weisenden Flansch 47 aufweist, an dem zwei Halbschalen 48 aus Blech befestigt sind, wobei in dem so gebildeten Hohlraum Abtriebszahnräder 49 gelagert sind, die in ihren Zentren die Abtriebswellen 11, 12 drehfest aufnehmen.

Beide Abtriebszahnräder 49 greifen in ein Ausgleichszahnrad 50 ein, das deaxial zu den Abtriebswellen 11, 12 zwischen den beiden Halbschalen 48 drehbar gelagert ist.

Die eine der Abtriebswellen 11 ist durch die hohle Abtriebswelle 44 des Elektromotors 41 geführt und dort drehbar gelagert. Weitere Lager befinden sich in den Stirnseiten des Gehäuses 40.

Wie schon weiter oben beschrieben, sind an den Abtriebswellen 11, 12 außerhalb des Gehäuses 40 Bremstrommeln 21 drehfest angebracht. An den Stirnseiten des Gehäuses 40 sind, was hier nicht näher ausgeführt ist, Bremsbacken 25 gelagert, die durch nicht dargestellte Spreizmittel gegen eine umlaufende Wand 23 der Bremstrommel 21 gedrückt werden können, um ein bremsendes Moment auf die Abtriebswellen 11, 12 auszuüben. Dies entspricht der Ausführung nach Fig. 1. Denkbar ist allerdings eine Ausführung der Bremseinrichtung, wie sie in der Fig. 2 dargestellt ist.

**Bezugszeichenliste**

| | | | |
|---|---|---|---|
| 1 | Differentialgetriebe | 26 | Trägerplatte |
| 2 | Bremseinrichtung | 27 | Anschluss |
| 3 | Differentialgehäuse | | |
| 4 | Eingangsöffnung | 30 | Radialbremsscheibe |
| 5 | Ausgangsöffnung | 31 | Trägerplatte |
| | | 32 | Deckel |
| 6 | Ausgangsöffnung | | |
| 7 | Antriebswelle | 40 | zylindrisches Gehäuse |
| 8 | Kegelzahnrad | 41 | Elektromotor |
| 9 | Differentialkorb | 42 | Rotor |
| 10 | Kegelzahnradanordnung | 43 | Stator |
| | | 44 | Abtriebswelle |
| 11 | Abtriebswelle | | |
| 12 | Abtriebswelle | 45 46 | Topf Träger |
| 20 | Verlängerungshülse | 47 | Flansch |
| 21 | Bremstrommel | 48 | Halbschalen |
| 22 | Boden | 49 | Abtriebszahnräder |
| 23 | umlaufende Wand | | |
| | | 50 | Ausgleichszahnrad |
| 25 | Bremsbacken | | |

## Patentansprüche

1. Differentialgetriebe (1) mit Bremseinrichtung (2), umfassend eine Antriebswelle (7), zwei Abtriebswellen (11, 12), ein Differentialgehäuse (3), das eine Eingangsöffnung (4) für die Antriebswelle (7) und zwei gegenüberliegende Ausgangsöffnungen (5, 6) für die Abtriebswellen (11, 12) aufweist, sowie mit einem Differentialkorb (9), wobei die wenigstens eine Bremseinrichtung (2) eine Trommelbremse ist, die ein passives Element (21, 30), das eine zylindrischen Reibfläche besitzt, und Bremsbacken (25) aufweist, deren Reibflächen an die zylindrische Reibfläche des passiven Elements (21, 30) anlegbar sind, dass das passive Element (21, 30) an dem Differentialkorb (9) und/oder an einer der Wellen (7, 11, 12) derart befestigt ist, dass seine zylindrische Reibfläche koaxial zu der jeweiligen Öffnung (4, 5, 6) angeordnet ist, und dass die Bremsbacken (25) auf einer Trägerplatte (26, 31) schwenkbar gehalten sind, die an einen Rand der genannten Öffnung (4, 5, 6) angeflanscht ist.

2. Differentialgetriebe (1) nach Anspruch 1, **dadurch gekennzeichnet, dass** das passive Element (21, 30) von einem Topf (45) gebildet ist, der aus einem Boden (22) und einer umlaufenden Wand (23) besteht, wobei die Innenseite der Wand (23) die zylindrische Reibfläche bildet, dass die offene Seite des Topfes (45) zum Differentialgehäuse (3) des Differentialgetriebes (1) weist, und dass innerhalb des Topfes (45) die Bremsbacken (25) angeordnet sind.

3. Differentialgetriebe (1) nach Anspruch 1, **dadurch gekennzeichnet, dass** das passive Element (21, 30) von einer Radialbremsscheibe (30) gebildet ist, deren Mantelfläche die zylindrische Reibfläche bildet.

4. Differentialgetriebe (1) nach Anspruch 3, **dadurch gekennzeichnet, dass** auf der Trägerplatte (31) ein Deckel (32) lösbar befestigt ist, so dass die Trägerplatte (31), die Bremsbacken (25) und die Radialbremsscheibe (30) eingehaust sind.

5. Differentialgetriebe (1) nach einem der vorhergehenden Ansprüche, **dadurch gekennzeichnet, dass** koaxial zu beiden Abtriebswellen (11, 12) jeweils eine Bremseinrichtung (2) installiert ist.

6. Differentialgetriebe (1) nach Anspruch 5, **dadurch gekennzeichnet, dass** das passive Element (21, 30) der einen Bremseinrichtung (2) mit dem Differentialkorb (9) und das passive Element (21, 30) der anderen Bremseinrichtung (2) mit einer der Abtriebswellen (11, 12) gekoppelt ist.

7. Differentialgetriebe (1) nach Anspruch 6, **dadurch gekennzeichnet, dass** der Differentialkorb (9) an einer Seite koaxial zur dortigen Abtriebswelle (11, 12) mittels einer Verlängerungshülse (20) verlängert ist, um eine Befestigung des passiven Elements (21, 30) zu ermöglichen.

8. Differentialgetriebe (1) nach einem der Ansprüche 1 bis 4, **dadurch gekennzeichnet, dass** eine einzige Bremseinrichtung (2) an der Antriebswelle (7) angeordnet ist.

9. Differentialgetriebe (1) nach einem der vorhergehenden Ansprüche 1 bis 4, **dadurch gekennzeichnet, dass** die Trägerplatte (26, 31) nach außen radial über das Differentialgehäuse (3) vorsteht, und an seiner Rückseite einen hydraulischen oder elektrischen Anschluss (27) für eine Stelleinrichtung der Bremsbacken (25) aufweist.

10. Differentialgetriebe (1) nach einem der vorhergehenden Ansprüche, **dadurch gekennzeichnet, dass** der Differentialkorb (9) mit einer Abtriebswelle (44) eines Elektromotors (41) gekoppelt ist, wobei die Abtriebswelle (44) hohl ausgeführt ist und koaxial zu einer der Abtriebswellen (11, 12) des Differentialgetriebes (1) verläuft.

11. Differentialgetriebe (1) nach Anspruch 10, **dadurch gekennzeichnet, dass** ein Ausgleichszahnrad (50) in Form eines Stirnzahnrades deaxial zu den Abtriebswellen (11,12) im Differentialkorb (9) gelagert ist, und dass die Abtriebswellen (11,12) mit je einem Abtriebszahnrad (49), das als Stirnzahnrad ausgebildet ist, in die Verzahnung des Ausgleichszahnrades (50) eingreifen.

12. Differentialgetriebe (1) nach einem der vorhergehenden Ansprüche, **dadurch gekennzeichnet, dass** der Elektromotor (41) und der Differentialkorb (9) in einem gemeinsamen zylindrischen Gehäuse (40) untergebracht sind, wobei die Abtriebswellen (11,12) durch Stirnseiten des Gehäuses (40) hindurchgeführt sind und dass an einer oder an beiden Stirnseite(n) je eine Bremseinrichtung (2) angeordnet ist.

## Claims

1. Differential (1) having a brake device (2), comprising a drive shaft (7), two output shafts (11, 12), a differential housing (3) which has an inlet opening (4) for the drive shaft (7) and two opposite outlet openings (5, 6) for the output shafts (11, 12), and having a differential cage (9), wherein the at least one brake device (2) is a drum brake which has a passive element (21, 30), which exhibits a cylindrical frictional surface, and brake shoes (25), the frictional surfaces of which brake shoes can be placed against the cylindrical frictional surface of the passive element (21, 30), wherein the passive element (21, 30) is fastened to the differential cage (9) and/or to one of the shafts (7, 11, 12) in such a way that its cylindrical frictional surface is arranged coaxially in relation to the respective opening (4, 5, 6), and wherein the brake shoes (25) are held in a pivotable manner on a carrier plate (26, 31) which is flange-connected to an edge of said opening (4, 5, 6).

2. Differential (1) according to Claim 1, **characterized in that** the passive element (21, 30) is formed by a pot (45) which consists of a base (22) and an encircling wall (23), wherein the inner side of the wall (23) forms the cylindrical frictional surface, **in that** the open side of the pot (45) faces the differential housing (3) of the differential (1), and **in that** the brake shoes (25) are arranged within the pot (45).

3. Differential (1) according to Claim 1, **characterized in that** the passive element (21, 30) is formed by a radial brake disc (30), the lateral surface of which radial brake disc forms the cylindrical frictional surface.

4. Differential (1) according to Claim 3, **characterized in that** a cover (32) is detachably fastened on the carrier plate (31), so that the carrier plate (31), the brake shoes (25) and the radial brake disc (30) are enclosed.

5. Differential (1) according to one of the preceding claims, **characterized in that** in each case one brake device (2) is installed coaxially in relation to the two output shafts (11, 12).

6. Differential (1) according to Claim 5, **characterized in that** the passive element (21, 30) of one brake device (2) is coupled to the differential cage (9), and the passive element (21, 30) of the other brake device (2) is coupled to one of the output shafts (11, 12).

7. Differential (1) according to Claim 6, **characterized in that** the differential cage (9), on a side which is coaxial in relation to the output shaft (11, 12) there, is extended by means of an extension sleeve (20) in order to allow fastening of the passive element (21, 30).

8. Differential (1) according to one of Claims 1 to 4, **characterized in that** a single brake device (2) is arranged on the drive shaft (7).

9. Differential (1) according to one of the preceding Claims 1 to 4, **characterized in that** the carrier plate (26, 31) projects radially outward beyond the differential housing (3), and has, on its rear side, a hydraulic or electrical connection (27) for an actuating device of the brake shoes (25).

10. Differential (1) according to one of the preceding claims, **characterized in that** the differential cage (9) is coupled to an output shaft (44) of an electric motor (41), wherein the output shaft (44) is of hollow design and runs coaxially in relation to one of the output shafts (11, 12) of the differential (1).

11. Differential (1) according to Claim 10, **characterized in that** a compensating gear (50) in the form of a spur gear is mounted diaxially in relation to the output shafts (11, 12) in the differential cage (9), and **in that** the output shafts (11, 12), by way of in each case one output gear (49) which is designed as a spur gear, engage into the toothing of the compensating gear (50).

12. Differential (1) according to one of the preceding claims, **characterized in that** the electric motor (41) and the differential cage (9) are accommodated in a common cylindrical housing (40), wherein the output shafts (11, 12) are passed through end sides of the housing (40), and **in that** in each case one brake device (2) is arranged on one or both end side/sides.

## Revendications

1. Engrenage différentiel (1) avec dispositif de freinage (2), comprenant un arbre d'entrée (7), deux arbres de sortie (11, 12), un boîtier de différentiel (3) qui présente une ouverture d'entrée (4) pour l'arbre d'entrée (7) et deux ouvertures de sortie opposées (5, 6) pour les arbres de sortie (11, 12), ainsi qu'un panier de différentiel (9), l'au moins un dispositif de freinage (2) étant un frein à tambour qui présente un élément passif (21, 30) possédant une surface de friction cylindrique, et des mâchoires de frein (25) dont les surfaces de friction peuvent être appliquées contre la surface de friction cylindrique de l'élément passif (21, 30), l'élément passif (21, 30) étant fixé au panier de différentiel (9) et/ou à l'un des arbres (7, 11, 12) de telle sorte que sa surface de friction cylindrique est agencée coaxialement à l'ouverture respective (4, 5, 6), et que les mâchoires de frein (25) sont maintenues de manière pivotante sur une plaque de support (26, 31) qui est bridée sur un bord de ladite ouverture (4, 5, 6).

2. Engrenage différentiel (1) selon la revendication 1, **caractérisé en ce que** l'élément passif (21, 30) est formé par un pot (45) qui est constitué d'un fond (22) et d'une paroi périphérique (23), le côté intérieur de la paroi (23) formant la surface de friction cylindrique, **en ce que** le côté ouvert du pot (45) est orienté vers le boîtier de différentiel (3) de l'engrenage différentiel (1), et **en ce que** les mâchoires de frein (25) sont agencées à l'intérieur du pot (45).

3. Engrenage différentiel (1) selon la revendication 1, **caractérisé en ce que** l'élément passif (21, 30) est formé par un disque de frein radial (30) dont la surface d'enveloppe forme la surface de friction cylindrique.

4. Engrenage différentiel (1) selon la revendication 3, **caractérisé en ce qu'**un couvercle (32) est fixé de manière amovible sur la plaque de support (31), de telle sorte que la plaque de support (31), les mâchoires de frein (25) et le disque de frein radial (30) sont enfermés.

5. Engrenage différentiel (1) selon l'une quelconque des revendications précédentes, **caractérisé en ce qu'**un dispositif de freinage (2) est respectivement installé coaxialement aux deux arbres de sortie (11, 12).

6. Engrenage différentiel (1) selon la revendication 5, **caractérisé en ce que** l'élément passif (21, 30) d'un dispositif de freinage (2) est couplé au panier de différentiel (9) et l'élément passif (21, 30) de l'autre dispositif de freinage (2) est couplé à l'un des arbres de sortie (11, 12).

7. Engrenage différentiel (1) selon la revendication 6, **caractérisé en ce que** le panier de différentiel (9) est prolongé sur un côté coaxialement à l'arbre de sortie (11, 12) à cet endroit au moyen d'une douille de prolongation (20) afin de permettre une fixation de l'élément passif (21, 30).

8. Engrenage différentiel (1) selon l'une quelconque des revendications 1 à 4, **caractérisé en ce qu'**un seul dispositif de freinage (2) est agencé sur l'arbre d'entrée (7).

9. Engrenage différentiel (1) selon l'une quelconque des revendications 1 à 4 précédentes, **caractérisé en ce que** la plaque de support (26, 31) fait saillie radialement vers l'extérieur au-dessus du boîtier de différentiel (3) et présente sur son côté arrière un raccordement hydraulique ou électrique (27) pour un dispositif de réglage des mâchoires de frein (25).

10. Engrenage différentiel (1) selon l'une quelconque des revendications précédentes, **caractérisé en ce que** le panier de différentiel (9) est couplé à un arbre de sortie (44) d'un moteur électrique (41), l'arbre de sortie (44) étant réalisé sous forme creuse et s'étendant coaxialement à l'un des arbres de sortie (11, 12) de l'engrenage différentiel (1).

11. Engrenage différentiel (1) selon la revendication 10, **caractérisé en ce qu'**une roue dentée de compensation (50) sous la forme d'une roue dentée frontale est logée dans le panier de différentiel (9) de manière désaxée par rapport aux arbres de sortie (11, 12), et **en ce que** les arbres de sortie (11, 12) s'engrènent chacun dans la denture de la roue dentée de compensation (50) par une roue dentée de sortie (49) qui est configurée sous forme de roue dentée frontale.

12. Engrenage différentiel (1) selon l'une quelconque des revendications précédentes, **caractérisé en ce que** le moteur électrique (41) et le panier de différentiel (9) sont disposés dans un boîtier cylindrique commun (40), les arbres de sortie (11, 12) traversant des côtés frontaux du boîtier (40) et **en ce qu'**un dispositif de freinage (2) est agencé sur l'un des côtés frontaux ou sur les deux.
